# EUROPÄISCHE PATENTANMELDUNG

(11) **EP 0 819 370 A1**
(43) Veröffentlichungstag der Anmeldung: **21.01.1998**
(21) Anmeldenummer: 97890137.9
(22) Anmeldetag: 15.07.1997
(51) Int. Cl.: A01D 34/30, A01D 34/08

(54) **Handgeführte, selbstfahrende Arbeitsmaschine**

(30) Priorität: 18.07.1996 AT 1297/96
(71) Anmelder: REFORM-WERKE BAUER & CO. GESELLSCHAFT M.B.H., A-4600 Wels (AT)
(72) Erfinder: Heindl, Erich, Ing., 4600 Wels (AT); Stockinger, Josef, Ing., 4722 Bruck-Waasen (AT)
(74) Vertreter: Itze, Peter, Dipl.-Ing.

(57) **Zusammenfassung**

Die Erfindung bezieht sich auf eine handgeführte, selbstfahrende Arbeitsmaschine mit einem Antrieb für ein quer zur Fahrtrichtung hin- und herbewegbares Arbeitswerkzeug, insbesondere Motormäher, bestehend aus einem Grundgerät mit Lenkholmen zum Führen der Maschine, einem Motor, gegebenenfalls einem antreibbaren Fahrwerk, sowie einer eine Massenausgleichseinrichtung für das hin- und herbewegbare Arbeitswerkzeug aufweisenden Antriebsvorrichtung, wobei die Massenausgleichseinrichtung einen oder mehrere Massenausgleichskörper (20, 21) aufweist, wobei die Massenausgleichskörper (20, 21; 20', 21') durch die Antriebsvorrichtung (7) für das Arbeitswerkzeug (10) synchron mit diesem angetrieben und im Gehäuse (11) der Antriebsvorrichtung (7) gelagert sind.

## Beschreibung

Die Erfindung bezieht sich auf eine handgeführte, selbstfahrende Arbeitsmaschine mit einem Antrieb für ein quer zur Fahrtrichtung hin- und herbewegbares Arbeitswerkzeug, insbesondere Motormäher, bestehend aus einem Grundgerät mit Lenkholmen zum Führen der Maschine, einem Motor, gegebenenfalls einem antreibbaren Fahrwerk, sowie einer eine Massenausgleichseinrichtung für das hin- und herbewegbare Arbeitswerkzeug aufweisenden Antriebsvorrichtung.

Bei solchen Arbeitsmaschinen entsteht durch die Bewegung des Arbeitswerkzeuges, also die Mähmesserbewegung, eine Massenkraft, die das Gerät in Schwingungen versetzt.

Bei handgeführten Motormähern liegen der Mähbalken vor und die Lenkholme hinter der Fahrachse, wodurch die Lenkholme verhältnismäßig großen Schwingungsausschlägen unterliegen, was die Führung des Motormähers beim Mähen erschwert, weil sich die Schwingungen der Lenkholme in die Arme und Schultern des Geräteführers fortpflanzen. Rasche Ermüdung und unter Umständen gesundheitliche Schäden sind die Folgen. Außerdem wird die Haltbarkeit der betroffenen Teile, wie z.B. der Lagerung des Mähbalkens, des Mähmesserantriebes oder der Befestigung der Lenkholme am Triebwerk verringert. Auch bei Arbeitsmaschinen mit gelenkten Rädern und einem Fahrersitz für den Geräteführer ergeben sich schädliche Wirkungen der von der Massenkraft des Arbeitswerkzeuges hervorgerufenen Schwingungen. Sie verringern die Haltbarkeit von Fahrgestell, Lenkung und Fahrersitz. Auch wird die Führung und Lenkung der Arbeitsmaschine erschwert.

Zur Lösung dieses Problems wurden bisher zwei Möglichkeiten vorgeschlagen:

Bei einer bekannten Ausbildung wurden die Lenkholme zum Führen der Maschine elastisch und damit schwingungsgedämpft an der Maschine befestigt. Dadurch werden die ärgsten Schwingungen von den Holmen und damit auch von der Bedienungsperson ferngehalten. Durch diese Maßnahme ergibt sich jedoch der Nachteil, daß die nachgiebige Verbindung der Lenkholme mit der Maschine die Lenkbarkeit und Führungsfähigkeit der Maschine sowie des Arbeitswerkzeuges stark beeinträchtigt. Außerdem wird durch diese Lösung die übrige Schwingungsbelastung der Maschine nicht gemildert.

In der DE-PS 36 10 140 wird für eine handgeführte selbstfahrende Maschine der eingangs genannten Art zum teilweisen Ausgleich der Massen des hin- und herbewegten Arbeitswerkzeuges vorgeschlagen, einen beweglichen, frei schwingenden Massenausgleichskörper vorzusehen, dessen Hin- und Herbewegung durch Federmittel dämpfend belastet sind. Die Massenausgleichskörper werden durch die Schwingung des Arbeitswerkzeuges selbsttätig in eine der Schwingung des Arbeitswerkzeuges entgegengesetzte Eigenschwingung versetzt. Bei einem Motormäher wird dabei als Massenausgleichskörper eine hinten um eine vertikale Achse schwenkbar gelagerte und vorne im Bereich des Mähbalkens über eine die hin- und hergehende Massenbewegung zulassende Führungseinrichtung mit dem Gehäuse des Mähantriebes verbundene Abdeckhaube vorgesehen.

Diese Anordnung der als Massenausgleichskörper beweglich und federnd gelagerten Abdeckhaube eines Motormähers ist wegen der der Verschmutzung ausgesetzten Gleitlagerstellen und dem dadurch auftretenden hohen Verschleiß für die Praxis ungeeignet. Darüberhinaus ergibt diese Anordnung aufgrund der freien Eigenschwingung keinen wesentlichen Ausgleich der vom Mähmesser erzeugten Massenkräfte, sondern bedeutet als Reaktion darauf nur eine verzögerte Dämpfung.

Der Erfindung liegt die Aufgabe zugrunde, bei einer Arbeitsmaschine, insbesondere eines Motormähers der eingangs genannten Art, eine leichte Führung bei der Arbeit zu gewährleisten, gesundheitliche Schäden für den Geräteführer zu vermeiden und die Haltbarkeit seiner Bauteile zu erhöhen.

Erfindungsgemäß wird diese Aufgabe dadurch gelöst, daß die Massenausgleichseinrichtung einen oder mehrere Massenausgleichskörper aufweist, wobei die Massenausgleichskörper durch die Antriebsvorrichtung für das Arbeitswerkzeug synchron mit diesem angetrieben und im Gehäuse der Antriebsvorrichtung gelagert sind. Diese Anordnung angetriebener Ausgleichmassen ergibt den Vorteil, daß die vom Arbeitswerkzeug ausgehenden Schwingungen gesteuert werden können, wobei durch die Lagerung der Ausgleichmassen im Gehäuse der Antriebsvorrichtung eine hohe Funktionssicherheit bei geringer Wartung erreicht wird. Werden z.B. bei einem handgeführten Motormäher keine wirkungsvollen Ausgleichmassen vorgesehen, wird er durch die nicht ausgeglichene Massenkraft des Mähmessers um eine die Fahrachse senkrecht schneidende, mittige Vertikalachse schwingend verdreht, wobei das Verdrehmoment gleich ist der Massenkraft des Mähmessers mal dessen Abstand von der Vertikalachse. In den Totlagen der Mähmesserbewegung ergeben sich mit den dort eintretenden Maximalwerten der Massenkraft beträchtliche Werte des Verdrehmomentes. Damit erklärt sich das Bild eines Motormähers ohne Massenausgleich bei der Arbeit, mit seinem rüttelnden Mähbalken, den schwingenden Lenkholmen und den stark vibrierenden Armen des Geräteführers. Zu große Beanspruchungen für Mensch und Maschine sind die Folgen.

Vorteilhafterweise kann/können die Massenausgleichskörper um eine Achse drehbar sein, die in einer rechtwinkelig zur Bewegungsrichtung des Arbeitswerkzeuges liegenden Ebene angeordnet ist, wodurch ein einfacher Massenausgleich erzielbar ist. Es kann/können jedoch auch der bzw. die Massenausgleichskörper für eine translatorische Bewegung entgegen die Bewegung des Arbeitswerkzeuges parallel zu demselben verschiebbar geführt und vorzugsweise über einen Kurbeltrieb von der Antriebsvorrichtung für das Arbeitswerkzeug angetrieben sein, wodurch eine der Messerbewegung genau gegenläufige gleichartige Massenausgleichsbewegung erreicht ist.

In einer bevorzugten Ausführungsform der Erfindung ist vorgesehen, daß als Massenausgleichkörper zwei gegenläufig rotierend angetriebene Ausgleichmassen dienen, deren Drehzahl gleich ist der Frequenz der periodischen Werkzeugbewegung, wobei die Fliehkräfte der beiden Ausgleichmassen bei Erreichen der Werzeug-Totlagen gleichgerichtet und der Bewegungsrichtung des Werkzeuges entgegengesetzt ist. Dies ermöglicht die Anwendung einer rotierenden und damit besonders verschleißarmen Massenausgleichseinrichtung, bei welcher in Fahrtrichtung wirkende Schwingungskräfte ausgeschaltet sind. Es sind damit die schädlichen Auswirkungen der Massenkraft z. B. des Mähmessers zur Gänze vermeidbar. Die beiden Ausgleichmassen haben gleiche Fliehkraftwirkung und sind so bemessen, daß in den Totlagen der Mähmesserbewegung die Resultierende ihrer Fliehkräfte gleich ist dem Maximalwert der Massenkraft des Mähmessers. Durch die gegenläufige Drehbewegung der beiden Schwungmassen ergeben sich dann für jede Lage des Mähmessers zu seiner Bewegungsrichtung parallele Fliehkraftkomponenten, deren Resultierende annähernd gleich groß, aber entgegengesetzt gerichtet ist der Massenkraft des Mähmessers, die dadurch ausgeglichen ist.

Das verbleibende Kräftepaar, gebildet aus Resultierender und Massenkraft, ergibt ein wesentlich kleineres Moment, als das Verdrehmoment der unausgeglichenen Massenkraft, wenn gemäß einer weiteren vorteilhaften Ausbildung des Erfindungsgegenstandes der Abstand der Ausgleichmassen zum Arbeitswerkzeug sowie der Abstand der Ausgleichmassen zueinander möglichst gering ist. Die zur Bewegungsrichtung des Mähmessers senkrechten Komponenten der Fliehkräfte der Ausgleichmassen sind gleich, jedoch einander entgegengesetzt gerichtet. Sie bilden ein Kräftepaar, dessen Kraftarm gleich ist dem parallel zur gemeinsamen Drehachse gemessenen Schwerpunktabstand der Ausgleichmassen. Es wirkt in der zur Bewegungsrichtung des Mähmessers senkrechten Ebene, in der auch die gemeinsame Drehachse der Ausgleichmassen liegt. Der Größtwert der senkrechten Fliehkraftkomponenten ist gleich der Fliehkraft einer Ausgleichmasse und somit nur halb so groß wie die Massenkraft des Mähmessers in dessen Totlagen. Nachdem die Ausgleichmassen einen möglichst kleinen Abstand zueinander haben, ist ersichtlich, daß das Moment dieses Kräftepaares lediglich ein vernachlässigbar kleiner Bruchteil des Verdrehmomentes der unausgeglichenen Massenkraft des Mähmessers ist.

Der beschriebene Massenausgleich ergibt anstelle des Verdrehmomentes der unausgeglichenen Massenkraft des Mähmessers ein wesentlich kleineres, das den Motormäher nicht mehr in schädliche Schwingungen versetzen kann. Bei der Arbeit liegen Mähbalken und Lenkholme ruhig, womit die angeführten nachteiligen Wirkungen vermieden sind.

Eine vorteilhafte Ausbildung des Erfindungsgegenstandes ergibt sich auch, wenn die Antriebsvorrichtung für das Arbeitswerkzeug eine Antriebswelle aufweist und wenn die Achse der Antriebswelle als Drehachse der Ausgleichmassen dient. Durch diese Maßnahme können für den Antrieb des Arbeitswerkzeuges notwendige Teile auch für Antrieb und Lagerung der Ausgleichmassen verwendet werden, was einen geringeren zusätzlichen Konstruktionsaufwand für den Massenausgleich ermöglicht.

Ein zusätzlicher Vorteil der Erfindung wird erreicht, wenn eine der beiden Ausgleichmassen fest mit der Antriebswelle verbunden und die andere Ausgleichmasse auf der Antriebswelle drehbar gelagert und vorzugsweise über ein Kegelrad-Umkehrgetriebe angetrieben ist. Diese Anordnung ermöglicht einen kostengünstigen gegenläufigen Antrieb der Ausgleichmassen sowie eine raumsparende Bauweise.

Eine weitere Vereinfachung der Arbeitsmaschine ergibt sich gemäß einem bevorzugten Merkmal der Erfindung, wenn zwischen dem Arbeitswerkzeug und den Ausgleichmassen ein Kurbelgetriebe zwischengeschaltet ist und wenn die vordere Ausgleichmasse fest mit der Kurbelscheibe verbunden ist. Damit wird die Anzahl der Bauteile verringert und die Ausgleichmassen können vorteilhaft näher am Arbeitswerkzeug angeordnet sein.

Die Erfindung ist auch bei Motormähern mit einem Zahnradkurbelgetriebe für den Mähmesserantrieb anwendbar, indem die vordere Ausgleichmasse vorzugsweise mit der Kurbelscheibe des Zahnradkurbelgetriebes vereinigt ist. Es ergibt sich ein Motormäher mit geradlinig hin- und herbewegtem Kurbelzapfen und einem fast vollkommenen Massenausgleich, wodurch die Haltbarkeit der Bauteile und die Leichtigkeit der Führung des Gerätes weiter gesteigert werden.

In der Zeichnung ist der Erfindungsgegenstand beispielsweise an Hand eines Motormähers dargestellt. Es zeigt
Fig. 1 einen handgeführten Motormäher in Seitenansicht,
Fig. 2 einen vertikalen Längsschnitt durch die Antriebsvorrichtung des Mähmessers,
Fig. 3 eine vergrößerte Darstellung der Massenausgleichkörper aus Fig. 2.
Fig. 4 zeigt die Zuordnung der Unwuchten der Ausgleichmassen zu den Totlagen des Mähmessers und
Fig. 5 den Kräfteplan der Massenkräfte des Mähmessers und der Ausgleichmassen, die als am Halbmesser r₈ wirkende Punktmassen dargestellt sind.
Fig. 6 zeigt schematisch eine Ausführungsvariante mit parallel zum Arbeitswerkzeug translatorisch bewegten Ausgleichsmassen.

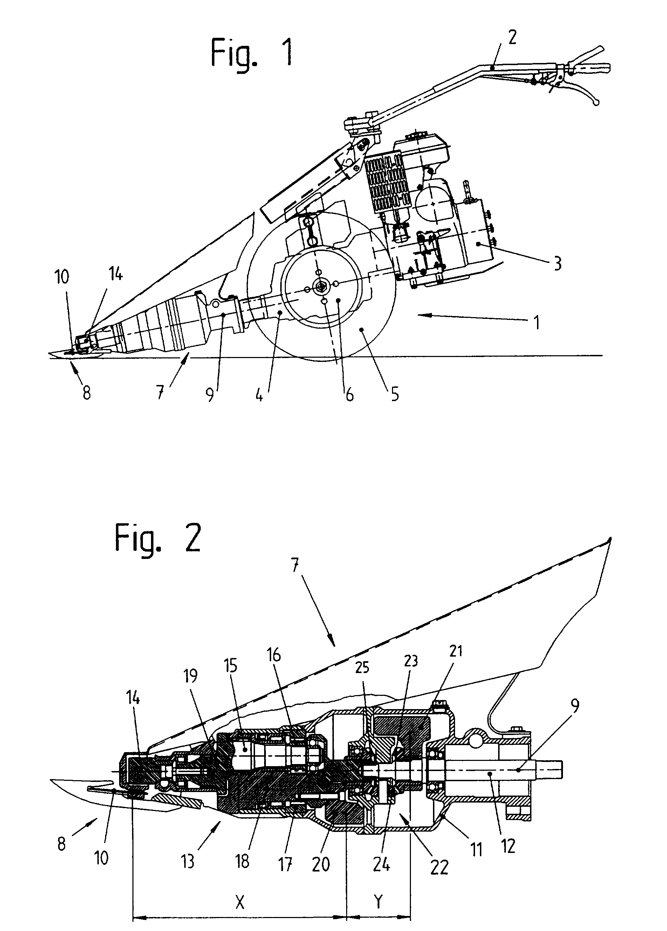

Der in Fig. 1 dargestellte Motormäher besteht aus dem Grundgerät 1 mit daran befestigten und nach hinten weisenden Lenkholmen 2 zum Führen der Maschine. Das Grundgerät 1 setzt sich zusammen aus einem Motor 3, einem von diesem angetriebenen Triebwerk 4 sowie einem zwei Räder 5 umfassenden Fahrwerk 6.

An der Vorderseite des Triebwerkes 4 ist die Antriebsvorrichtung 7 für den Mähbalken 8 um die Achse 9 schwenkbar gelagert.

Der Mähbalken 8 ist vorne mit der Antriebsvorrichtung 7 verbunden und weist ein rechtwinkelig zur Achse 9 bzw. zur Fahrtrichtung hin- und herbewegbares Mähmesser 10 auf.

Wie aus Fig. 2 ersichtlich ist besteht die Antriebsvorrichtung 7 aus einer in einem Gehäuse 11 gelagerten, die Achse 9 bildenden, Antriebswelle 12 sowie einem von dieser angetriebenen Kurbelgetriebe 13, dessen Treibzapfen 14 das Mähmesser 10 in eine hin- und hergehende Bewegung versetzt. In dem dargestellten Ausführungsbeispiel ist das Kurbelgetriebe 13 als Zahnradkurbelgetriebe mit einem Übersetzungsverhältnis zwischen dem auf der Kurbel 15 befestigten Zahnrad 16 und dem Innenzahnkranz 17 1 : 2 ausgeführt. Dadurch wird die Drehbewegung der Kurbelscheibe 18 in eine geradlinige Hin- und Herbewegung des am Kurbelzapfen 19 gelagerten Treibzapfens 14 umgewandelt, wobei die Drehzahl der Kurbelscheibe 18 gleich ist der Frequenz der Mähmesserbewegung.

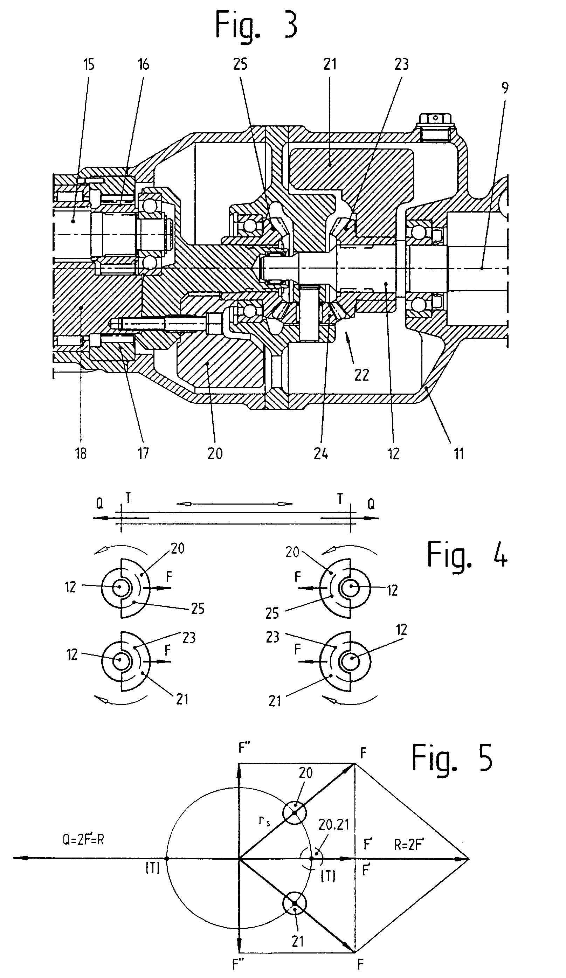

Zum Ausgleich der durch die Mähmesserbewegung erzeugten Massenkräfte Q sind im Gehäuse 11 der Antriebsvorrichtung 7 zwei um die Achse 9 rotierende Ausgleichmassen 20, 21 angeordnet. Wie in Fig. 3 dargestellt, ist die vordere Ausgleichmasse 20 fest mit der Kurbelscheibe 18 des Zahnradkurbelgetriebes 13 und die hintere Ausgleichmasse 21 fest mit der Antriebswelle 12 verbunden. Die beiden Ausgleichmassen 20, 21 werden über ein Kegelrad-Umkehrgetriebe 22 gegenläufig angetrieben, wobei das Kegelrad 23 der Antriebswelle 12 über ein im Gehäuse 11 gelagertes Ritzel 24 das Kegelrad 25 der Kurbelscheibe 18 antreibt. Die Ausgleichmassen 20, 21 sind zueinander und zum Mähmesser 10 so angeordnet, daß in der in Fig. 2 dargestellten Mittellage des Mähmessers 10 ihre parallelen Schwerachsen in der in der gemeinsamen Drehachse 9 liegenden Vertikalebene diametral gegenüberliegen. Aus der Geometrie des Zahnradkurbelgetriebes 13 folgt, daß auch die Achse des Treibzapfens 14 und der Kurbel 15 bei der Mittellage des Mähmessers 10 in dieser Vertikalebene liegen. Dadurch wird infolge des gegenläufigen Antriebes erreicht, daß in den Totlagen T der Mähmesserbewegung die Fliehkräfte F der Ausgleichmassen 20, 21 parallel und der Massenkraft Q des Mähmessers entgegengesetzt gerichtet sind.

Fig. 4 zeigt in vereinfachter Weise, wie die Ausgleichmassen 20, 21 den Totlagen T des Mähmessers 10 zugeordnet sind. Um eine weitgehende Ausgleichswirkung zu erreichen, sind sie auf der Achse 9 so anzuordnen, daß ihre Fliehkräfte F parallel und entgegengesetzt gerichtet sind der Massenkraft Q des Mähmessers 10, wobei die Resultierende Rₘₐₓ der Fliehkräfte F gleich ist dem Größtwert Qₘₐₓ der Massenkraft Q. Es ist

Rₘₐₓ = 2 F = Qₘₐₓ oder F = Qₘₐₓ/2

Nach diesem Zusammenhang sind die Ausgleichmassen 20, 21 zu bemessen.

Durch die gegenläufige Drehbewegung der Ausgleichmassen 20, 21 ergeben sich nach Fig. 5 für jede Lage des Mähmessers 10 zu seiner Bewegungsrichtung parallele Fliehkraftkomponenten F', deren Resultierende R = 2 F' stets annähernd gleich groß, jedoch entgegengesetzt gerichtet ist der jeweiligen Massenkraft Q, die damit ausgeglichen ist. Die zur Bewegungsrichtung des Mähmessers senkrechten Fliehkraftkomponenten F" heben sich gegenseitig auf. Die verbleibenden Momente aus den Kräften R, Q bzw. F', F" sind umso kleiner je geringer die Abstände X, Y der Ausgleichmassen 20, 21 vom Mähmesser 10 und voneinander sind.

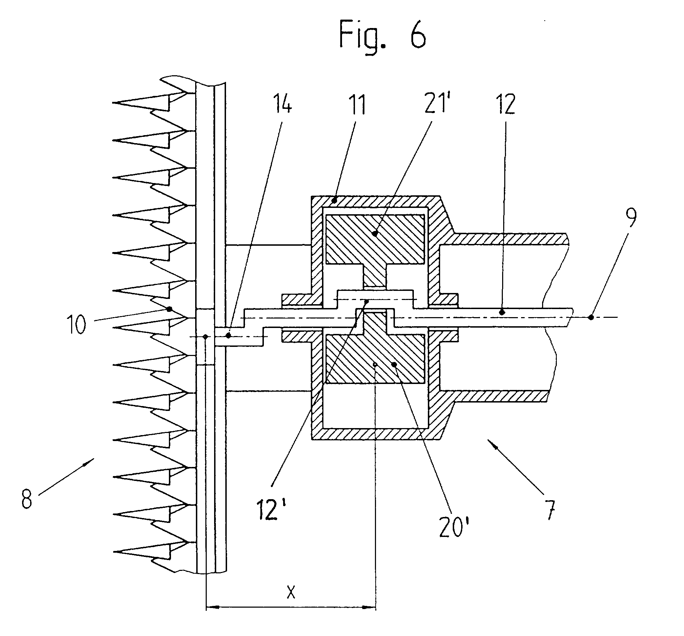

Bei der Ausführungsvariante gemäß Fig. 6 sind die Ausgleichsmassen 20', 21' als in parallel zur Bewegungsrichtung des Arbeitswerkzeuges 10 verlaufenden Führungen innerhalb des Gehäuses 11 gleitend gelagert und durch einen gekröpften Bereich 12' der Antriebswelle 12 für das Arbeitswerkzeug 10 gegenläufig zu demselben angetrieben. Die Masse der Ausgleichsmassen 20'; 21' entspricht der bewegten Masse des Arbeitswerkzeuges, wobei die unterschiedliche Entfernung der Ausgleichsmassen bzw. des Arbeitswerkzeuges von der Triebwerksachse entsprechend berücksichtigt ist.

## Patentansprüche

1. Handgeführte, selbstfahrende Arbeitsmaschine mit einem Antrieb für ein quer zur Fahrtrichtung hin- und herbewegbares Arbeitswerkzeug, insbesondere Motormäher, bestehend aus einem Grundgerät mit Lenkholmen zum Führen der Maschine, einem Motor, gegebenenfalls einem antreibbaren Fahrwerk, sowie einer eine Massenausgleichseinrichtung für das hin- und herbewegbare Arbeitswerkzeug aufweisenden Antriebsvorrichtung, dadurch gekennzeichnet, daß die Massenausgleichseinrichtung einen oder mehrere Massenausgleichskörper (20,21) aufweist, wobei die Massenausgleichskörper (20, 21; 20', 21') durch die Antriebsvorrichtung (7) für das Arbeitswerkzeug (10) synchron mit diesem angetrieben und im Gehäuse (11) der Antriebsvorrichtung (7) gelagert sind.

2. Arbeitsmaschine nach Anspruch 1, dadurch gekennzeichnet, daß der/die Massenausgleichskörper (20, 21) um eine Achse (9) drehbar ist/sind, die in einer rechtwinkelig zur Bewegungsrichtung des Arbeitswerkzeuges (10) liegenden Ebene angeordnet ist.

3. Arbeitsmaschine nach Anspruch 1, dadurch gekennzeichnet, daß der bzw. die Massenausgleichskörper (20', 21') für eine translatorische Bewegung entgegen die Bewegung des Arbeitswerkzeuges (10) parallel zu demselben verschiebbar geführt und vorzugsweise über einen Kurbeltrieb von der Antriebsvorrichtung (7) für das Arbeitswerkzeug (10) angetrieben sind.

4. Arbeitsmaschine nach Anspruch 2, dadurch gekennzeichnet, daß als Massenausgleichskörper zwei gegenläufig rotierend angetriebene Ausgleichsmassen (20,21) dienen, deren Drehzahl gleich ist der Frequenz der periodischen Werkzeugbewegung, wobei die Fliehkräfte (F) der beiden Ausgleichsmassen (20,21) bei Erreichen der Werkzeug-Totlagen (T) gleichgerichtet und der Bewegungsrichtung des Werkzeuges entgegengesetzt sind.

5. Arbeitsmaschine nach einem der Ansprüche 1 bis 4, dadurch gekennzeichnet, daß die rechtwinkelig zur Bewegungsrichtung des Arbeitswerkzeuges gemessene Entfernung (X) der Ausgleichsmassen (20,21) vom Arbeitswerkzeug (10) sowie die Entfernung (Y) der Ausgleichsmassen (20,21) voneinander möglichst gering ist.

6. Arbeitsmaschine nach einem der Ansprüche 1, 2 und 4, 5, dadurch gekennzeichnet, daß als Drehachse (9) für die Ausgleichsmassen (20, 21) die Antriebswelle (12) der Antriebsvorrichtung (7) für das Arbeitswerkzeug (10) dient.

7. Arbeitsmaschine nach Anspruch 6, dadurch gekennzeichnet, daß eine der beiden Ausgleichsmassen (21) fest mit der Antriebswelle (12) verbunden und die andere Ausgleichsmasse (20) auf der Antriebswelle (12) drehbar gelagert und vorzugsweise über ein Kegelrad-Umkehrgetriebe (22) angetrieben ist.

8. Arbeitsmaschine nach einem der Ansprüche 1, 2 und 4 bis 7, dadurch gekennzeichnet, daß zwischen dem Arbeitswerkzeug (10) und den Ausgleichsmassen (20,21) ein Kurbelgetriebe (13) zwischengeschaltet ist, und daß die vordere Ausgleichsmasse (20) fest mit der Kurbelscheibe (18) verbunden ist.
